(19) Europäisches Patentamt
European Patent Office
Office européen des brevets

(11) **EP 3 628 417 A1**

(12) **EUROPEAN PATENT APPLICATION**
published in accordance with Art. 153(4) EPC

(43) Date of publication:
**01.04.2020 Bulletin 2020/14**

(51) Int Cl.:
**B22F 1/00** *(2006.01)*

(21) Application number: **18790843.9**

(86) International application number:
**PCT/JP2018/016671**

(22) Date of filing: **24.04.2018**

(87) International publication number:
**WO 2018/199110 (01.11.2018 Gazette 2018/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.04.2017 JP 2017090563**

(71) Applicant: **Furukawa Electric Co., Ltd.**
**Chiyoda-ku**
**Tokyo 100-8322 (JP)**

(72) Inventor: **YOSHIDA Hirokazu**
**Tokyo 100-8322 (JP)**

(74) Representative: **Zacco GmbH**
**Bayerstrasse 83**
**80335 München (DE)**

(54) **COPPER ALLOY PARTICLES, SURFACE-COATED COPPER-BASED PARTICLES AND MIXED PARTICLES**

(57) It is an object of the present invention to provide copper alloy particles or the like, wherein, by sufficiently melting an irradiation region with heat generated through the irradiation of a laser beam during manufacturing in particular, a layer-manufactured product can be obtained, which has low porosity (void fraction), and excellent corrosion resistance and fatigue characteristics.

Copper alloy particles 1 of the present invention are used as an Additive Manufacturing material by irradiation with a laser beam having a wavelength of 1.2 $\mu$m or less, and have an average particle diameter of 50 $\mu$m or less, wherein a light absorption rate of the material is 6% or more.

FIG.1

## Description

Technical Field

The present invention relates to copper alloy particles, surface-coated copper-based particles, and mixed particles suitably used as a material when a copper alloy part having a particularly complicated shape such as a heat diffusion part such as a heat pipe or a vapor chamber or an electronic device part such as a bus bar, a connector, or a lead frame mounted in a personal computer and a smart phone or the like is subjected to laser Additive Manufacturing.

Background Art

The miniaturization and weight reduction of electronic devices such as a personal computer, a tablet, and a smart phone are progressing, and data throughput is being rapidly increased, so that high-speed operation processing is performed. This causes a problem of generation of heat (thermal storage) to arise. For this reason, there has been increasing demand for providing highly-functional heat release members such as a heat pipe and a vapor chamber, for example, in the electronic devices. However, conventional manufacturing methods such as an extrusion-forge processing method and a powder metallurgy method make it difficult to form a small heat release member having a complicated shape with sufficient accuracy, so that the demand characteristics cannot necessarily be satisfied.

Therefore, in recent years, a so-called laser Additive Manufacturing technique has been attracting attention. In the technique, metal particles as a material are uniformly laid down at a thickness of about 0.05 mm on a manufacturing-working table for manufacturing a product by squeezing due to a recoater, to form a thin particle layer. Then, the thin particle layer is irradiated with a laser beam based on CAD data, to melt-solidify only the irradiation portion of the particle layer. Furthermore, various kinds of parts such as a heat pipe can be manufactured as a layer-manufactured product by repeatedly performing the formation of a particle layer and the irradiation of a laser beam using a laser Additive Manufacturing apparatus (so-called 3D printer).

However, when copper-based particles are used as the metal particles of the material, copper has a high laser beam reflection rate and a low light absorption rate (for example, the reflection rate of a plate made of oxygen-free copper for electron tubes (alloy number: C1011) specified in JIS H3510:2012 and subjected to mirror polishing is measured by SolidSpec-3700DUV (manufactured by Shimadzu Corporation), and a value obtained by deducting the reflection rate from 100 is taken as an absorption rate. The absorption rate of light of 1065 nm is 4.6%), so that the manufacture of the manufactured product makes it necessary to use a high-output laser apparatus. Since copper has excellent thermal conductivity, heat occurring in the irradiation portion of the laser is instantaneously diffused into the portion of the particle layer excluding the irradiation portion, so that a satisfactory manufactured product is not obtained under the existing circumstances. Therefore, the manufacture of the satisfactory layer-manufactured product using the copper-based particles makes it necessary to increase the light absorption rate of the copper-based particles to cause a good melt-solidification phenomenon to occur in the irradiation portion during laser irradiation.

For example, in Patent Literature 1, a copper alloy powder is described, which contains 0.10% by mass or more and 1.00% by mass or less of at least one of chromium and silicon, wherein the total amount of the chromium and the silicon is 1.00% by mass or less, and the balance is copper.

In Patent Literature 2, a metal formed body is described, which is made of an alloy containing a main metallic element and an addition element, wherein a ratio (100(a-b)/b) of an atomic radius a of the addition element to an atomic radius b of the main metallic element is -30% to +30%. The metal formed body is manufactured by layering a raw material metallic powder according to a layering construction method, wherein the main metallic element is Cu, and the addition element is one or more selected from the group consisting of K, Mn Rh, Pd, Pt, and Au as a complete solid solution type element having no solubility limit, Li, Be, Mg, Al, Si, Ti, Co, Zn, Ga, Ge, As, Ni, Ag, Sn, Ir, and Hg as a maximum solid solution type element having 1 to 50% by weight of maximum solubility limit, H, B, C, Sc, Cr, Fe, Mo, Ag, Cd, Sb, Hf, and Ir as a minute amount solid solution type element having 0.01 to 1% by weight of maximum solubility limit, and Se, Mo, Tc, Ru, I, Ta, W, Re, and Os as a non-solid solution type element having 0% by weight of maximum solubility limit.

Furthermore, in Patent Literature 3, a three-dimensional manufacturing material is described, wherein a metal manufactured product is manufactured from metal particles obtained by mixing high-melting-point metal particles made of Cu or the like with low-melting-point metal particles made of Sn or the like for the purpose of homogenization of input heat and rapid cooling.

However, each of Patent Literatures 1 to 3 does not examine the composition and particle diameter size or the like of copper-based particles from the viewpoint of improving the light absorption rate of the copper-based particles when the copper-based alloy particles as a material are irradiated with a laser beam. When pure copper particles are irradiated with a laser having a wavelength of 1.2 $\mu$m or less, particularly a fiber laser having a wavelength of 1.065 nm, copper particles having a low light absorption rate are not sufficiently melted, so that a porosity (void fraction) numerical value tends to be increased to 1% or more. Furthermore, an alloy element capable of decreasing the porosity (void fraction) numerical value to less than 1% is not mentioned at all.

Document List

Patent Literatures

Patent Literature 1: Japanese Patent No. 6030186
Patent Literature 2: Japanese Patent Application Laid-Open No. 2016-053198
Patent Literature 3: Japanese Patent No. 5943963

Summary of Invention

Technical Problem

It is an object of the present invention to suitably set the particle diameter size and light absorption rate of copper-based particles used as an Additive Manufacturing material with respect to the wavelength of a laser beam to be irradiated, whereby heat generated through the irradiation of a laser beam during manufacturing in particular causes a good melt-solidification phenomenon to occur in an irradiation portion of a particle layer, to provide a layer-manufactured product having a low porosity (void fraction) numerical value of less than 1%, and excellent corrosion resistance and fatigue characteristics, for example, copper alloy particles, surface-coated copper-based particles, and mixed particles suitable for providing a heat diffusion part such as a heat pipe or a vapor chamber and an electronic device part such as a bus bar, a connector, or a lead frame mounted in a personal computer and a smart phone or the like.

Solution to Problem

In order to achieve the above object, the present invention primarily includes the following components.

(1) Copper alloy particles characterized by being used as an Additive Manufacturing material by irradiation with a laser beam having a wavelength of 1.2 $\mu$m or less, and having an average particle diameter of 50 $\mu$m or less, wherein a light absorption rate of the material is 6% or more.
(2) The copper alloy particles according to above (1), wherein the copper alloy particles contain Ni: 1.0 to 40.0% by mass, Al: 0 to 10% by mass, Cr: 0 to 10% by mass, Co: 0 to 10% by mass, Fe: 0 to 10% by mass, Mg: 0 to 10% by mass, Mn : 0 to 10% by mass, Mo: 0 to 10% by mass, Pd: 0 to 10% by mass, Pt: 0 to 10% by mass, Rh: 0 to 10% by mass, Si: 0 to 10% by mass, Sn: 0 to 10% by mass, Ti: 0 to 10% by mass, W: 0 to 10% by mass, Zn: 0 to 10% by mass, C: 0 to 10% by mass, and S: 0 to 10% by mass, the balance being copper and unavoidable impurities.
(3) The copper alloy particles according to above (2), wherein the copper alloy particles contain at least one element selected from the group of Al: 0.5 to 10% by mass, Cr: 0.5 to 10% by mass, Co: 0.5 to 10% by mass, Fe: 0.5 to 10% by mass, Mg: 0.5 to 10% by mass, Mn : 0.5 to 10% by mass, Mo: 0.5 to 10% by mass, Pd: 0.5 to 10% by mass, Pt: 0.5 to 10% by mass, Rh: 0.5 to 10% by mass, Si: 0.5 to 10% by mass, Sn: 0.5 to 10% by mass, Ti: 0.5 to 10% by mass, W: 0.5 to 10% by mass, Zn: 0.5 to 10% by mass, C: 0.5 to 10% by mass, and S: 0.5 to 10% by mass; and when the at least one or more element contained is two or more elements, a total content of the two or more elements is 1 to 30% by mass.
(4) The copper alloy particles according to any one of above (1) to (3), further comprising a metal oxide layer formed on a surface thereof and having a film thickness of 1.0 to 100 nm.
(5) Surface-coated copper-based particles comprising: copper-based particles of copper particles used as an Additive Manufacturing material by irradiation with a laser beam having a wavelength of 1.2 $\mu$m or less, and having an average particle diameter of 50 $\mu$m or less, or copper alloy particles according to any one of claims 1 to 3; and a metal-containing layer formed at a coating rate of 50% or more on a surface of the copper-based particles, wherein a light absorption rate of the material is 6% or more; an average composition of the surface-coated copper-based particles contains Ni: 1.0 to 40.0% by mass, Al: 0 to 10% by mass, Cr: 0 to 10% by mass, Co: 0 to 10% by mass, Fe: 0 to 10% by mass, Mg: 0 to 10% by mass, Mn : 0 to 10% by mass, Mo: 0 to 10% by mass, Pd: 0 to 10% by mass, Pt: 0 to 10% by mass, Rh: 0 to 10% by mass, Si: 0 to 10% by mass, Sn: 0 to 10% by mass, Ti: 0 to 10% by mass, W: 0 to 10% by mass, Zn: 0 to 10% by mass, C: 0 to 10% by mass, and S: 0 to 10% by mass, the balance being copper and unavoidable impurities.
(6) The surface-coated copper-based particles according to above (5), wherein the average composition of the surface-coated copper-based particles contains at least one element selected from the group of Ni: 1.0 to 40.0% by mass, Al: 0.5 to 10% by mass, Cr: 0.5 to 10% by mass, Co: 0.5 to 10% by mass, Fe: 0.5 to 10% by mass, Mg: 0.5 to 10% by mass, Mn: 0.5 to 10% by mass, Mo: 0.5 to 10% by mass, Pd: 0.5 to 10% by mass, Pt: 0.5 to 10% by mass, Rh: 0.5 to 10% by mass, Si: 0.5 to 10% by mass, Sn: 0.5 to 10% by mass, Ti: 0.5 to 10% by mass, W: 0.5 to 10% by mass, Zn: 0.5 to 10% by mass, C: 0.5 to 10% by mass, and S: 0.5 to 10% by mass; when the at least one or more element contained is two or more elements, a total content of the two or more elements is 1 to 30% by mass; and the balance is copper and unavoidable impurities.

(7) The surface-coated copper-based particles according to above (5) or (6), further comprising a metal oxide layer formed on a surface thereof and having a film thickness of 1.0 to 100 nm.

(8) Mixed particles characterized by comprising: copper-based particles used as an Additive Manufacturing material by irradiation with a laser beam having a wavelength of 1.2 μm or less, having an average particle diameter of 50 μm or less, and made of copper or a copper alloy; and heteroparticles having a different composition from that of the copper-based particles, wherein an average light absorption rate (β) of the material calculated from the following formula is 6% or more:

[Expression 1]

$$\beta = \sum_i \alpha_i \times V_i$$

wherein $\alpha_i$ is a light absorption rate of the material of each particle i forming the mixed particles, and $V_i$ is a volume fraction of each particle i in the mixed particles.

(9) The mixed particles according to above (8), wherein an average composition of the mixed particles contains Ni: 1.0 to 40.0% by mass, Al: 0 to 10% by mass, Cr: 0 to 10% by mass, Co: 0 to 10% by mass, Fe: 0 to 10% by mass, Mg: 0 to 10% by mass, Mn: 0 to 10% by mass, Mo: 0 to 10% by mass, Pd: 0 to 10% by mass, Pt: 0 to 10% by mass, Rh: 0 to 10% by mass, Si: 0 to 10% by mass, Sn: 0 to 10% by mass, Ti: 0 to 10% by mass, W: 0 to 10% by mass, Zn: 0 to 10% by mass, C: 0 to 10% by mass, and S: 0 to 10% by mass, the balance being copper and unavoidable impurities.

(10) The mixed particles according to above (9), wherein the average composition contains at least one element selected from the group of Ni: 1.0 to 40.0% by mass, Al: 0.5 to 10% by mass, Cr: 0.5 to 10% by mass, Co: 0.5 to 10% by mass, Fe: 0.5 to 10% by mass, Mg: 0.5 to 10% by mass, Mn: 0.5 to 10% by mass, Mo: 0.5 to 10% by mass, Pd: 0.5 to 10% by mass, Pt: 0.5 to 10% by mass, Rh: 0.5 to 10% by mass, Si: 0.5 to 10% by mass, Sn: 0.5 to 10% by mass, Ti: 0.5 to 10% by mass, W: 0.5 to 10% by mass, Zn: 0.5 to 10% by mass, C: 0.5 to 10% by mass, and S: 0.5 to 10% by mass; when the at least one or more element contained is two or more elements, a total content of the two or more elements is 1 to 30% by mass; and the balance is copper and unavoidable impurities.

(11) The mixed particles according to any one of above (8) to (10), wherein a ratio of an average particle diameter of the heteroparticles to an average particle diameter of the copper-based particles is within a range of 0.1 or less, or 0.5 to 1.5.

(12) The mixed particles according to any one of above (8) to (11), wherein the heteroparticles are single component particles or particles of two or more alloy components selected from the group of Ni, Al, Cr, Co, Fe, Mg, Mn, Mo, Pd, Pt, Rh, Si, Sn, Ti, W, Zn, C, and S.

(13) A method for manufacturing a layer-manufactured product comprising: a particle layer forming step of forming a particle layer with the copper alloy particles according to any one of above (1) to (4); and a manufactured layer forming step of melt-solidifying the copper alloy particles present at a predetermined position of the particle layer to form a manufactured layer, wherein the particle layer forming step and the manufactured layer forming step are sequentially repeated to layer the manufactured layer.

(14) A method for manufacturing a layer-manufactured product comprising: a particle layer forming step of forming a particle layer with the surface-coated copper-based particles according to any one of above (5) to (7); and a manufactured layer forming step of melt-solidifying the copper alloy particles present at a predetermined position of the particle layer to form a manufactured layer, wherein the particle layer forming step and the manufactured layer forming step are sequentially repeated to layer the manufactured layer.

(15) A method for manufacturing a layer-manufactured product comprising: a particle layer forming step of forming a particle layer with the mixed particles according to any one of above 8 to 12; and a manufactured layer forming step of melt-solidifying the copper alloy particles present at a predetermined position of the particle layer to form a manufactured layer, wherein the particle layer forming step and the manufactured layer forming step are sequentially repeated to layer the manufactured layer.

(16) The method for manufacturing according to any one of above (13) to (15), further comprising the step of performing at least one of a heat treatment step and a forge treatment step after layering the manufactured layer.

Effects of Invention

The present invention is used as an Additive Manufacturing material by irradiation with a laser beam having a wavelength of 1.2 $\mu$m or less, and has an average particle diameter of 50 $\mu$m or less, wherein a light absorption rate of the material is 6% or more. Therefore, heat generated through the irradiation of the laser beam during manufacturing in particular causes a good melt-solidification phenomenon to occur in an irradiation portion of a particle layer. This can provide a layer-manufactured product having a low porosity (void fraction) numerical value of less than 1%, and excellent corrosion resistance and fatigue characteristics, for example, copper alloy particles, surface-coated copper-based particles, and mixed particles suitable for providing a heat diffusion part such as a heat pipe or a vapor chamber, and an electronic device part such as a bus bar, a connector, and a lead frame mounted in a personal computer and a smart phone or the like.

Brief Description of Drawings

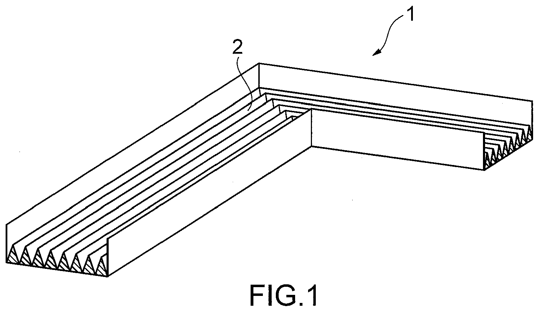

[FIG. 1] A schematic perspective view of a flat heat pipe manufactured by an Additive Manufacturing apparatus (3D printer) using copper alloy particles according to the present invention as a material, the heat pipe shown in a state where an upper surface plate part is removed so that the internal structure of the heat pipe can be understood.

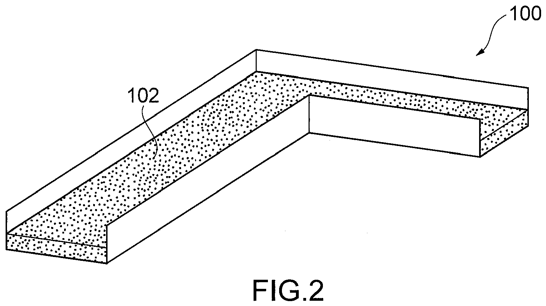

[FIG. 2] A schematic perspective view of a flat heat pipe manufactured by subjecting a commercially available pure copper powder to a heat treatment (sintering) as a conventional producing method, the heat pipe shown in a state where an upper surface plate part is removed so that the internal structure of the heat pipe can be understood.

Description of Embodiments

Hereinafter, an embodiment of copper alloy particles according to the present invention will be described in detail below.
The copper alloy particles according to the present invention are used as an Additive Manufacturing material by irradiation with a laser beam having a wavelength of 1.2 $\mu$m or less, and have an average particle diameter of 50 $\mu$m or less. A light absorption rate of the material is 6% or more. The copper alloy particles may be primary particles, or particles (secondary particles) generated by aggregation and consolidation or the like of the primary particles. Therefore, the average particle diameter of the copper alloy particles means an average primary particle size when the copper alloy particles are the primary particles, and means an average secondary particle size when the copper alloy particles are the secondary particles.
In general, for example, in the case of a $CO_2$ (carbon dioxide) laser having a wavelength of 10.6 $\mu$m, the light absorption rate of any metal is substantially uniform and low, but in the case of a laser having a wavelength of 1.2 $\mu$m or less, for example, a YAG laser (wavelength: 1.06 $\mu$m), or a fiber laser (wavelength: 1.065 $\mu$m), the light absorption rate of each metal is higher than that in the case of the $CO_2$ (carbon dioxide) laser. The light absorption rate is largely different for each metal. For example, copper has a low light absorption rate of about 4.6% in a wavelength band of 1 $\mu$m, so that a satisfactory manufactured product is not obtained under the existing circumstances.
Therefore, the present inventors examine copper-based particles as a material. The copper-based particles conventionally make it difficult to manufacture a satisfactory layer-manufactured product according to a laser Additive Manufacturing technique. By limiting the wavelength of a laser beam during Additive Manufacturing to 1.2 $\mu$m or less, setting the average particle diameter of the copper-based particles used as a material to 50 $\mu$m or less, and increasing the light absorption rate of the material to 6% or more, the copper alloy particles irradiated with the laser beam can achieve a good melting phenomenon. As a result, the present inventors have been successfully manufactured various types of copper alloy parts as satisfactory layer-manufactured products having complicated shapes, thereby completing the present invention.
Here, the reason why the wavelength of the laser beam is limited to 1.2 $\mu$m or less is that a decrease in a beam diameter when reproducing fine Additive Manufacturing has an effect of providing high manufacturing accuracy and a reduction in fine porosity. Incidentally, when the theoretical limit of a minimum spot diameter (diameter) $D_0$ obtained when a laser beam having a single mode is condensed with a lens having a focal length f is approximately represented by the following formula when a wavelength is taken as $\lambda$ and an incident beam diameter is taken as D.

$$D_0 = (4 \times \lambda \times f) / (\pi \times D)$$

As can be seen from the formula, the spot diameter can be decreased by decreasing the wavelength $\lambda$. As a result, the external dimension accuracy of the manufactured product can be improved. Incidentally, the minimum spot diameter $D_0$ is desirably set to 100 $\mu$m or less.

The reason why the average particle diameter of the copper-based particles is limited to 50 $\mu$m or less is as follows. When an average particle diameter D50 (a particle diameter of 50% in a cumulative distribution) exceeds 50 $\mu$m, the flowability of a powder is deteriorated in a powder-bed method, so that a thin particle layer cannot be uniformly laid down by squeezing due to a recoater. It is more preferable that the copper-based particles have an average particle diameter D50 of 50 $\mu$m or less and D95 (a particle diameter of 95% in a cumulative distribution) of 100 $\mu$m or less.

Furthermore, it is widely known that the reason why the light absorption rate of the material is limited to 6% or more is as follows. The light absorption rate of pure copper is 4.6%, so that the absorption of light energy is poor. This makes it impossible to sufficiently melt a metal powder, so that coarse porosity occurs ("Influences of powder characteristics and Additive Manufacturing conditions exerted on Additive Manufacturing of copper by selective laser melting apparatus" or the like in the autumn meet in Heisei 28, presented by Japan Society of Powder and Powder Metallurgy). The sufficient melting of the copper-based particles makes it necessary to introduce a higher-output laser apparatus, so that the manufacturing cost of the layer-manufactured product is increased.

Here, in a method for measuring the light absorption rate of the material, a copper raw material (for example, 8 kg) used as the material is charged into an arc melting furnace or an induction-heating furnace to prepare an ingot, and a test piece of, for example, 30 mm × 35 mm is cut from the ingot. The reflection rate of each of diffuse reflection and mirror reflection (specular reflection) of light energy of 0.250 to 2.000 $\mu$m (per 0.005 $\mu$m) is measured at an incidence angle of 8° using an ultraviolet-visible-near infrared spectrophotometer (SolidSpec-3700DUV, manufactured by Shimadzu Corporation), and the sum of the reflection rates is obtained as the total reflection rate. The surface of the sample is subjected to mirror polishing to form a non-oxidizing surface. The light absorption rate is calculated by substituting the numerical value of the obtained reflection rate for the formula: light absorption rate (%) = 100 - reflection rate (%).

When the present inventors use the copper alloy particles having an average particle diameter of 50 $\mu$m or less as a material obtained by irradiation with a laser beam having a wavelength of 1.2 $\mu$m or less, the present inventors examine an increase in the light absorption rate of the material to 6% or more. The present inventors found that 1% or more of nickel is contained as copper alloy particles, as surface-coated copper-based particles, or as mixed particles containing copper-based particles and heteroparticles, whereby the light absorption rate of the above-mentioned material is 6% or more, to allow a good melt-solidification phenomenon of the copper-based particles to occur in an irradiation portion of a particle layer irradiated with the laser beam, as a result of which a satisfactory layer-manufactured product (copper alloy part) having porosity (void fraction) of less than 1% can be manufactured, and the copper alloy part has both excellent corrosion resistance and fatigue characteristics. Hereinafter, the reasons for limitation of the copper alloy particles, surface-coated copper-based particles, and mixed particles will be described.

(First Embodiment (Copper Alloy Particles))

A material for Additive Manufacturing of a first embodiment is copper alloy particles containing Ni: 1.0 to 40.0% by mass, Al: 0 to 10% by mass, Cr: 0 to 10% by mass, Co: 0 to 10% by mass, Fe: 0 to 10% by mass, Mg: 0 to 10% by mass, Mn : 0 to 10% by mass, Mo: 0 to 10% by mass, Pd: 0 to 10% by mass, Pt: 0 to 10% by mass, Rh: 0 to 10% by mass, Si: 0 to 10% by mass, Sn: 0 to 10% by mass, Ti: 0 to 10% by mass, W: 0 to 10% by mass, Zn: 0 to 10% by mass, C: 0 to 10% by mass, and S: 0 to 10% by mass, the balance being copper and unavoidable impurities.

The copper alloy particles of the present embodiment contain Ni: 1.0 to 40.0% as an indispensable component. Components of Al: 0 to 10%, Cr: 0 to 10%, Co: 0 to 10%, Fe: 0 to 10%, Mg: 0 to 10%, Mn: 0 to 10%, Mo: 0 to 10%, Pd: 0 to 10%, Pt: 0 to 10%, Rh: 0 to 10%, Si: 0 to 10%, Sn: 0 to 10%, Ti: 0 to 10%, W: 0 to 10%, Zn: 0 to 10%, C: 0 to 10%, and S: 0 to 10% are optional addition components appropriately added depending on demand performance to the copper alloy part to be manufactured.

<Indispensable Component>

- Ni: 1.0 to 40.0% by mass

Ni (nickel) is an important element not only improving corrosion resistance but also capable of exhibiting an effect of markedly increasing the light absorption rate of a laser beam having a wavelength of 1.2 $\mu$m or less, in particular, a fiber laser having a wavelength of 1.065 $\mu$m in small amounts. In order to exhibit the effect, the content of Ni is preferably 1.0% by mass or more. When the content of Ni exceeds 40.0% by mass, the optical absorption property of the copper alloy particles is increased, as a result of which the particles are rapidly melted, and a local temperature is nearly increased to a boiling point. The melted metal is partially excited into a plasma, to generate keyholes, and air bubbles are involved in a melted pool by the convection of the melted metal in the melted pool (for example, Journal of Japan Welding Society, volume 78th (2009), No. 2, p. 124-138). As a result, porosity (void fraction) is formed in a manufactured product, and cannot be set to less than 1%. For this reason, the content of Ni is preferably within a range of 1.0 to 40.0% by mass. Ni is an element further having an effect of improving flowability in the case of squeezing, and the content of Ni is more preferably 3.0% by mass or more in terms of improving the flowability.

<Optional Addition Components>

It is preferable that the copper alloy particles of the first embodiment contain 0.5 to 10% by mass of at least one element selected from the group of Al (aluminum), Cr (chromium), Co (cobalt), Fe (iron), Mg (magnesium), Mn (manganese), Mo (molybdenum), Pd (palladium), Pt (platinum), Rh (rhodium), Si (silicon), Sn (tin), Ti (titanium), W (tungsten), Zn (zinc), C (carbon), and S (sulfur), and when the at least one element contained is two or more elements, a total content of the two or more elements is 1 to 30% by mass. These components are elements added in order to improve the optical absorption property. The content of each of the addition components is preferably set to 0.5% by mass or more in order to improve the property. Meanwhile, even if each of the addition components is added in an amount of more than 10% by mass, a further improvement effect cannot be expected. When two or more optional addition components are contained, the total content is preferably 1 to 30% by mass from the viewpoint that an effect of improving the absorption rate can be expected.

<Balance>

The balance excluding the above-mentioned indispensable component and optional addition components is Cu and inescapable impurities. In the copper alloy particles, the "inescapable impurities" here are generally present in raw materials, or unescapably mixed in a manufacturing process, and originally unnecessary. The inescapable impurities are acceptable impurities since the inescapable impurities in an extremely small amount of about 0.05% by mass or less do not to affect the characteristics of the copper alloy particles.

(Second Embodiment (Surface-Coated Copper-Based Particles))

A material for Additive Manufacturing of a second embodiment is surface-coated copper-based particles containing copper-based particles of copper particles used as an Additive Manufacturing material by irradiation with a laser beam having a wavelength of 1.2 $\mu$m or less, and having an average particle diameter of 50 $\mu$m or less, or copper alloy particles of the first embodiment; and a metal-containing layer formed at a coating rate of 50% or more on a surface of the copper-based particles. An average composition of the surface-coated copper-based particles contains Ni: 1.0 to 40.0% by mass, Al: 0 to 10% by mass, Cr: 0 to 10% by mass, Co: 0 to 10% by mass, Fe: 0 to 10% by mass, Mg: 0 to 10% by mass, Mn : 0 to 10% by mass, Mo: 0 to 10% by mass, Pd: 0 to 10% by mass, Pt: 0 to 10% by mass, Rh: 0 to 10% by mass, Si: 0 to 10% by mass, Sn: 0 to 10% by mass, Ti: 0 to 10% by mass, W: 0 to 10% by mass, Zn: 0 to 10% by mass, C: 0 to 10% by mass, and S: 0 to 10% by mass, the balance being copper and unavoidable impurities.

The surface-coated copper-based particles of the present embodiment contain Ni: 1.0 to 40.0% as an indispensable component in the whole surface-coated copper-based particles. Components of Al: 0 to 10%, Cr: 0 to 10%, Co: 0 to 10%, Fe: 0 to 10%, Mg: 0 to 10%, Mn: 0 to 10%, Mo: 0 to 10%, Pd: 0 to 10%, Pt: 0 to 10%, Rh: 0 to 10%, Si: 0 to 10%, Sn: 0 to 10%, Ti: 0 to 10%, W: 0 to 10%, Zn: 0 to 10%, C: 0 to 10%, and S: 0 to 10% are optional addition components appropriately added depending on demand performance to the copper alloy part to be manufactured.

Only a form of a material for Additive Manufacturing in the second embodiment (surface-coated copper-based particles) is different from that in the first embodiment (copper alloy particles), and a copper alloy part melt-solidified by irradiation with laser in the second embodiment has the same composition as that in the first embodiment. That is, in the second embodiment, the surface-coated copper-based particles containing the copper-based particles of the copper particles or the copper alloy particles, and the metal-containing layer are used as the material for Additive Manufacturing, whereby the appropriate selection of the metal-containing layer makes it possible to use the copper particles in place of the copper alloy particles without limitation to only the case of using the copper alloy particles of the first embodiment.

The metal-containing layer is preferably formed at a coating rate of 50% or more on the surface of the copper-based particles. If the coating rate of the metal-containing layer is less than 50%, a portion having a low absorption rate is more than a portion having a high absorption rate, and variation occurs in the absorption of light energy for every particle. This causes a time lag to occur in the melting of the particles for a short period of time (to several microseconds), so that coarse boring defects caused by melting delay occur.

The metal-containing layer and the copper-based particles form a part of the material, and the metal-containing layer is melt-solidified by irradiation with laser in the surface-coated copper-based particles, to form a copper alloy part. The average composition of the copper alloy part may have a component composition in the above-mentioned composition range. Examples thereof include, but are not particularly limited to, a Ni layer, a Co layer, a Sn layer, and a Zn layer. A method for forming the metal-containing layer is not particularly limited, and the metal-containing layer can be formed by, for example, wet plating such as electrolytic plating or non-electrolytic plating, and dry plating such as vapor deposition.

Since the reason for limitation of the average composition is the same as the reason for limitation of the copper alloy particles of the first embodiment, the description is omitted.

(Third Embodiment (Mixed Particles))

A material for Additive Manufacturing of a third embodiment is mixed particles containing: copper-based particles used as an Additive Manufacturing material by irradiation with a laser beam having a wavelength of 1.2 $\mu$m or less, having an average particle diameter of 50 $\mu$m or less, and made of copper or a copper alloy; and heteroparticles having a different composition from that of the copper-based particles, wherein an average light absorption rate ($\beta$) of the material calculated from the following formula is 6% or more:

[Expression 2]

$$\beta = \sum_i \alpha_i \times V_i$$

wherein $\alpha_i$ is a light absorption rate of the material of each particle i forming the mixed particles, and Vi is a volume fraction of each particle i in the mixed particles.

In the third embodiment, the mixed particles containing: the copper-based particles made of copper or a copper alloy; and the heteroparticles are used as the material for Additive Manufacturing in place of the copper alloy particles of the first embodiment, to set the average light absorption rate ($\beta$) to 6% or more.

The mixed particles of the present embodiment contain Ni: 1.0 to 40.0% as an indispensable component in the whole mixed particles. Components of Al: 0 to 10%, Cr: 0 to 10%, Co: 0 to 10%, Fe: 0 to 10%, Mg: 0 to 10%, Mn: 0 to 10%, Mo: 0 to 10%, Pd: 0 to 10%, Pt: 0 to 10%, Rh: 0 to 10%, Si: 0 to 10%, Sn: 0 to 10%, Ti: 0 to 10%, W: 0 to 10%, Zn: 0 to 10%, C: 0 to 10%, and S: 0 to 10% are optional addition components appropriately added depending on demand performance to the copper alloy part to be manufactured.

Only a form of a material for Additive Manufacturing in the third embodiment (mixed particles) is different from that in the first embodiment (copper alloy particles), and a copper alloy part melt-solidified by irradiation with laser in the third embodiment has the same composition as that in the first embodiment. That is, in the third embodiment, the mixed particles containing the copper-based particles of the copper particles or the copper alloy particles, and the heteroparticles are used as the material for Additive Manufacturing, whereby the appropriate selection of the heteroparticles makes it possible to use the copper particles in place of the copper alloy particles without limitation to only the case of using the copper alloy particles of the first embodiment.

The heteroparticles are preferably single component particles or particles of two or more alloy components selected from the group of, for example, Ni, Al, Cr, Co, Fe, Mg, Mn, Mo, Pd, Pt, Rh, Si, Sn, Ti, W, Zn, C, and S.

Since the reason for limitation of the average composition of the mixed particles is the same as the reason for limitation of the copper alloy particles of the first embodiment, the description is omitted.

The ratio of the average particle diameter of the heteroparticles to the average particle diameter of the copper-based particles (the ratio of the average particle diameter of the heteroparticles/the average particle diameter of the copper-based particles) is preferably within a range of 0.1 or less, or 0.5 to 1.5 including the nanoparticles in order to improve the flowability when squeezing the particles. When the ratio is 0.1 or less, the heteroparticles enter a clearance gap between the copper-based particles, whereby the flowability is not impaired. When the ratio is 0.5 to 1.5, the copper-based particles and the heteroparticles exhibit similar behaviors, whereby the flowability is not impaired.

<Other Embodiment>

As other embodiment, it is preferable that a metal oxide layer having a film thickness of 1.0 to 100 nm is further formed on the surface of the copper alloy particles of the first embodiment or the surface-coated copper-based particles of the second embodiment. The metal oxide layer has an effect of suppressing the reflection of light to increase a light absorption rate, whereby the film thickness of the metal oxide layer is preferably set to 1.0 nm or more. Meanwhile, if the film thickness of the metal oxide layer is made greater than 100 nm, the porosity (void fraction) numerical value of a layer-manufactured product (copper alloy part) is increased to 1% or more, and squeezing property (flowability of particles) when copper alloy particles or surface-coated copper-based particles as a material are laid down on a manufacturing-working table for manufacturing the copper alloy part by squeezing, to form a thin particle layer is deteriorated.

Furthermore, the flowability of a melted metal forming the copper-based particles may be deteriorated, so that manufacturing property is inhibited. The film thickness of the metal oxide layer is preferably 1.0 to 100 nm, and more preferably 1.0 to 50 nm.

Hereinbefore, embodiments of the present invention have been described. However, the present invention is not limited to the above embodiments, and includes all aspects included in the concept of the present invention and appended claims, and various modifications can be made within the scope of the present invention.

Furthermore, when these particles are uniformly squeezed, high radio frequency radiation of 5 kHz or more is applied to a recoater, whereby the alignment of the particles is further developed to cause the porosity of the manufactured product to be decreased from 0.8% to 0.6%. This provides vibration application to improve a phenomenon in which copper-based particles are fixed to extremely fine surface flaws (size: -10 $\mu$m) in the surface of a blade used when the particles are squeezed, so that uniform squeezing cannot be provided. Therefore, the copper-based particles are more uniformly dispersed to provide a uniform clearance gap between the particles, and uniform heat resistance between the particles, whereby thermal energy transformed from light energy by laser is uniformly diffused, to improve the void fraction after melt-solidification.

Thereafter, a method for manufacturing a layer-manufactured product using the copper alloy particles, the surface-coated copper-based particles, and/or the mixed particles (hereinafter, may be referred to as "material particles") of the present invention will be described.

First, using material particle feeding means, material particles are laid down at a desired thickness in a manufacturing area to form a particle layer. Examples of the material particle feeding means include a recoater. Thereafter, the material particles present at a predetermined position of the formed particle layer are melt-solidified by a heat source generated by irradiation with a laser beam having a wavelength of 1.2 $\mu$m or less, to form a manufactured layer. A copper alloy member as the layer-manufactured product can be manufactured by sequentially repeating the above-mentioned particle layer forming step and the manufactured layer forming step to layer the manufactured layer. Examples of an apparatus for manufacturing the layer-manufactured product include a powder firing layering type Additive Manufacturing apparatus (3D printer).

The layer-manufactured product may be manufactured, followed by heat-treating the manufactured layer-manufactured product as necessary to increase the strength of the layer-manufactured product. The manufactured layer-manufactured product may be further formed while the layer-manufactured product is subjected to forge processing to increase the strength of the layer-manufactured product.

Examples

Thereafter, Examples and Comparative Examples will be described to further clarify the advantageous effects of the present invention. However, the present invention is never limited to these Examples.

(Examples 1A to 11A and Comparative Examples 1A to 13A)

Components were weighed so as to provide component compositions shown in Table 1. The weighed components were charged into a melting furnace where the components were melted to produce copper alloys (ingots). When the components to be melted included high-melting-point elements such as Mo, W, and Ti, the components were arc-melted in a vacuum in an arc melting furnace. When components to be melted included no high-melting-point elements, the components were melted in an argon atmosphere in an induction-heating furnace. Each of the produced copper alloys (ingots) was mechanically ground, and the ground copper alloy as the ground product was melted and then sprayed by a gas atomizing apparatus, to obtain copper alloy particles. In order to obtain microscopic particles, a spraying chamber of the gas atomizing apparatus was atmosphere filled with a mixed gas of 85% by volume of $N_2$ and 15% by volume of $H_2$, or He gas. The collected copper alloy powder (particles) was sieved for size classification. The particle size distribution of the copper alloy powder subjected to the size classification was measured by a laser diffraction type size distribution measuring apparatus (SALD-2300, manufactured by Shimadzu Corporation), and a value of D50 was used as an average particle diameter.

The flowability of the copper alloy particles was measured by using a flowability measuring instrument (hall flowmeter) in accordance with the "Metal powder-fluidity measurement method" specified in JIS Z2502:2012.

Furthermore, a light absorption rate was obtained as follows. A test piece (bulk piece) of 30 × 35 mm was cut from an ingot before a copper alloy powder (particles) was produced, and the reflection rate of each of diffuse reflection and mirror reflection (specular reflection) of light energy of 0.250 to 2.000 $\mu$m (per 0.005 $\mu$m) at an incidence angle of 8° was measured by using an ultraviolet-visible-near infrared spectrophotometer (SolidSpec-3700DUV, manufactured by Shimadzu Corporation). The sum of the reflection rates was obtained as the total reflection rate. The surface of the sample was subjected to mirror polishing to form a non-oxidizing surface. The light absorption rate was calculated by substituting the numerical value of the obtained reflection rate for the formula: light absorption rate (%) = 100 - reflection rate (%).

Thereafter, a layer-manufactured product (copper alloy part) having a size of 130 mm × 20 mm × 9 mm was produced from the produced copper alloy particles using Concept Laser M2 (wavelength: 1065 nm, output: 400 W) as a laser Additive Manufacturing apparatus. A test piece of 120 mm × 14 mm × 3 mm was produced by cutting work in order to remove surface particles and to secure a smooth surface. The apparent density of each of the produced manufactured products (copper alloy parts) was measured by the Archimedes method, and a void fraction (%) was calculated by using the following formula from a difference between the apparent density and a true density.

$$\text{Void fraction (\%)} = (\text{true density} - \text{appearance density}) / \text{true density} \times 100$$

The average particle diameter D50 of each of the copper alloy particles used as the material of the manufactured product, the light absorption rate (%) of a wavelength band of 1 μm as the material, the void fraction (%) of each of the manufactured products (copper alloy parts), and comprehensive determination are shown in Table 1. The comprehensive determination was made in four stages of "very good", "good", "average", and "poor" according to the criteria shown below based on the results of the void fraction in the manufactured product (copper alloy part), fatigue resistance, and corrosion resistance. "Very good" and "good" were taken as acceptance level.

The void fraction in the manufactured product (copper alloy part) of less than 1% was taken as acceptance level, and the void fraction of 1% or more was taken as non-acceptance.

A fatigue test was performed by a plane bending fatigue tester (manufactured by TOKYO KOKI ENGINEERING CO. LTD.) for the fatigue resistance. The number of fatigue ruptures was measured. A fatigue life of 10,000 times or more was taken as "very good". The fatigue life of 5,000 times or more and less than 10,000 times was taken as "good". The fatigue life of 3,000 times or more and less than 5,000 times was taken as "average". The fatigue life of less than 3,000 times was taken as "poor". In the present Examples, "very good", "good", and "average" were taken as acceptance level.

A salt spray test was performed based on JIS Z 2371:2015 for the corrosion resistance. The rate of change of the sample mass of after 1,000 hours of less than 0.1% was taken as "very good". The rate of change of 0.1% or more and less than 0.5% was taken as "good". The rate of change of 0.5% or more and less than 1.0% was taken as "average". The rate of change of 1.0% or more was taken as "poor". In the present Examples, "very good", "good", and "average" were taken as acceptance level.

<Comprehensive Determination>

Very good: the void fraction is less than 1% and both the fatigue resistance and the corrosion resistance are "very good (A)".

Good: the void fraction is less than 1% and both the fatigue resistance and the corrosion resistance are equal to or greater than "good (B)".

Average: the void fraction is less than 1% and at least one of the fatigue resistance and the corrosion resistance is not "very good (A)" and "good (B)", but both the fatigue resistance and the corrosion resistance are equal to or greater than "average (C)".

Poor: the void fraction is less than 1% and at least one of the fatigue resistance and the corrosion resistance is "poor (D)", or the void fraction is 1% or more.

[Table 1]

Table 1

| | Copper alloy particles | | | | | | | | | | | | | | | | | | | | Average particle diameter (μm) | Light absorption rate of wavelength band of 1 μm (%) | Manufactured product (copper alloy part) | | |
|---|---|---|---|---|---|---|---|---|---|---|---|---|---|---|---|---|---|---|---|---|---|---|---|---|---|
| | Component composition | | | | | | | | | | | | | | | | | | | (% by mass) | | | Void fraction (%) | Fatigue resistance | Comprehensive determination |
| | Ni | Al | Cr | Co | Fe | Mg | Mn | Mo | Pd | Pt | Rh | Si | Sn | Ti | W | Zn | C | S | Cu | | | | | | |
| Example 1A | 30.3 | 6.8 | 0.0 | 0.0 | 1.5 | 0.0 | 0.0 | 0.0 | 0.0 | 0.0 | 0.0 | 0.0 | 0.0 | 0.0 | 0.0 | 0.0 | 0.000 | 0.000 | Balance | 10 | 24.0 | | 0.5 | Good | Very good |
| Example 2A | 1.5 | 0.0 | 0.5 | 9.8 | 0.0 | 0.0 | 0.0 | 0.0 | 0.0 | 0.0 | 0.0 | 0.0 | 0.0 | 0.0 | 0.0 | 0.0 | 0.000 | 0.000 | Balance | 42 | 12.8 | | 0.7 | Good | Very good |
| Example 3A | 49.0 | 0.0 | 0.0 | 0.0 | 0.0 | 0.0 | 0.0 | 0.0 | 0.0 | 0.0 | 0.0 | 9.5 | 0.0 | 0.0 | 0.0 | 0.0 | 2.600 | 0.000 | Balance | 18 | 32.0 | | 0.3 | Good | Very good |
| Example 4A | 4.0 | 0.0 | 0.0 | 0.0 | 0.0 | 0.5 | 0.0 | 0.0 | 0.0 | 0.0 | 0.0 | 1.2 | 0.0 | 0.0 | 0.0 | 0.0 | 0.000 | 0.021 | Balance | 35 | 6.5 | | 0.9 | Good | Very good |
| Example 5A | 15.4 | 0.0 | 0.0 | 0.0 | 0.0 | 0.0 | 0.0 | 0.0 | 0.0 | 0.0 | 0.0 | 0.0 | 0.0 | 0.0 | 8.0 | 0.0 | 0.000 | 0.000 | Balance | 17 | 15.6 | | 0.9 | Good | Very good |
| Example 6A | 31.6 | 0.0 | 0.0 | 0.0 | 1.0 | 0.0 | 1.5 | 0.0 | 0.0 | 0.0 | 0.0 | 0.0 | 0.0 | 0.0 | 0.0 | 0.0 | 0.000 | 0.000 | Balance | 42 | 32.1 | | 0.2 | Good | Very good |
| Example 7A | 2.3 | 0.0 | 0.0 | 0.0 | 0.0 | 0.0 | 0.0 | 5.2 | 0.0 | 0.0 | 0.0 | 0.0 | 0.0 | 0.0 | 0.0 | 0.0 | 0.000 | 0.000 | Balance | 41 | 7.5 | | 0.1 | Good | Very good |
| Example 8A | 4.5 | 0.0 | 0.0 | 0.0 | 0.0 | 0.0 | 0.0 | 0.0 | 0.0 | 0.0 | 0.0 | 1.6 | 0.0 | 0.0 | 0.0 | 0.0 | 0.000 | 0.000 | Balance | 15 | 9.1 | | 0.2 | Good | Very good |
| Example 9A | 1.2 | 0.0 | 0.0 | 0.0 | 0.0 | 0.0 | 0.0 | 0.0 | 0.0 | 1.1 | 1.2 | 0.0 | 0.0 | 0.0 | 0.0 | 0.0 | 0.000 | 0.000 | Balance | 26 | 7.3 | | 0.7 | Good | Good |
| Example 10A | 11.3 | 0.0 | 0.0 | 0.0 | 0.0 | 0.0 | 0.0 | 0.0 | 0.0 | 0.0 | 0.0 | 0.0 | 0.0 | 2.3 | 0.0 | 0.0 | 0.850 | 0.000 | Balance | 6 | 12.4 | | 0.2 | Good | Very good |
| Example 11A | 29.2 | 0.0 | 0.0 | 0.0 | 0.0 | 0.0 | 0.0 | 0.0 | 0.0 | 0.0 | 0.0 | 0.0 | 0.0 | 0.0 | 0.0 | 9.0 | 3.480 | 0.000 | Balance | 36 | 25.3 | | 0.6 | Good | Very good |
| Comparative Example 1A | 0.6 | 0.1 | 0.0 | 0.0 | 0.3 | 0.0 | 0.0 | 0.0 | 0.0 | 0.0 | 0.0 | 0.0 | 0.0 | 0.0 | 0.0 | 0.0 | 0.000 | 0.000 | Balance | 65 | 5.8 | | 3.7 | Poor | Poor |
| Comparative Example 2A | 0.2 | 0.0 | 0.3 | 0.2 | 0.0 | 0.0 | 0.0 | 0.0 | 0.0 | 0.0 | 0.0 | 0.0 | 0.0 | 0.0 | 0.0 | 0.0 | 0.000 | 0.000 | Balance | 53 | 5.6 | | 2.9 | Poor | Average |
| Comparative Example 3A | 0.1 | 0.0 | 0.0 | 0.0 | 0.0 | 0.0 | 0.0 | 0.0 | 0.0 | 0.0 | 0.0 | 0.3 | 0.0 | 0.0 | 0.0 | 0.0 | 0.000 | 0.000 | Balance | 42 | 5.6 | | 1.1 | Average | Average |
| Comparative Example 4A | 0.8 | 0.0 | 0.0 | 0.0 | 0.0 | 0.0 | 0.0 | 0.0 | 0.0 | 0.0 | 0.1 | 0.0 | 0.0 | 0.0 | 0.0 | 0.0 | 0.000 | 0.000 | Balance | 28 | 5.5 | | 1.3 | Poor | Poor |
| Comparative Example 5A | 0.9 | 0.0 | 0.0 | 0.0 | 0.0 | 0.3 | 0.0 | 0.0 | 0.0 | 0.0 | 0.0 | 0.0 | 0.0 | 0.0 | 0.0 | 0.4 | 0.000 | 0.000 | Balance | 39 | 5.9 | | 2.3 | Poor | Average |
| Comparative Example 6A | 0.5 | 0.0 | 0.0 | 0.0 | 0.1 | 0.0 | 0.1 | 0.0 | 0.0 | 0.0 | 0.0 | 0.0 | 0.0 | 0.0 | 0.0 | 0.0 | 0.000 | 0.000 | Balance | 3 | 5.3 | | 3.1 | Poor | Poor |
| Comparative Example 7A | 0.4 | 0.0 | 0.0 | 0.0 | 0.0 | 0.0 | 0.0 | 0.1 | 0.0 | 0.0 | 0.0 | 0.0 | 0.0 | 0.0 | 0.0 | 0.0 | 0.000 | 0.000 | Balance | 48 | 5.4 | | 3.1 | Poor | Poor |
| Comparative Example 8A | 0.4 | 0.0 | 0.0 | 0.0 | 0.0 | 0.0 | 0.0 | 0.0 | 0.4 | 0.0 | 0.0 | 0.0 | 0.0 | 0.0 | 0.0 | 0.0 | 0.000 | 0.000 | Balance | 4 | 5.8 | | 2.9 | Poor | Average |
| Comparative Example 9A | 0.1 | 0.0 | 0.0 | 0.0 | 0.0 | 0.0 | 0.0 | 0.0 | 0.0 | 0.3 | 0.1 | 0.0 | 0.0 | 0.0 | 0.0 | 0.0 | 0.000 | 0.000 | Balance | 39 | 5.5 | | 4.5 | Poor | Poor |
| Comparative Example 10A | 0.3 | 0.0 | 0.0 | 0.0 | 0.0 | 0.0 | 0.0 | 0.0 | 0.0 | 0.0 | 0.0 | 0.0 | 0.0 | 0.3 | 0.0 | 0.0 | 0.000 | 0.000 | Balance | 41 | 5.4 | | 1.7 | Poor | Poor |
| Comparative Example 11A | 0.2 | 0.0 | 0.0 | 0.0 | 0.0 | 0.0 | 0.0 | 0.0 | 0.0 | 0.0 | 0.0 | 0.0 | 0.5 | 0.0 | 0.0 | 0.0 | 0.000 | 0.000 | Balance | 39 | 5.4 | | 1.3 | Average | Poor |
| Comparative Example 12A | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 | 0.000 | 0.000 | Balance | 31 | 4.6 | | 4.2 | Poor | Poor |
| Comparative Example 13A | 49.0 | 0.0 | 0.0 | 0.0 | 0.0 | 0.0 | 0.0 | 0.0 | 0.0 | 0.0 | 0.0 | 9.5 | 0.0 | 0.0 | 0.0 | 0.0 | 0.000 | 0.000 | Balance | 57 | 32.0 | | 1.7 | Poor | Poor |

From the results shown in Table 1, in each of Examples 1A to 11A, the comprehensive determination was equal to or greater than "good"; the void fraction was less than 1%; and both the fatigue resistance and the corrosion resistance were equal to or greater than "good (B)". Meanwhile, in each of Comparative Examples 1A to 13A, the void fraction was 1% or more; the fatigue characteristics were "average" or "poor"; and the comprehensive determination was equal to or less than "average", and was non-acceptance.

(Examples 1B to 12B and Comparative Examples 1B to 7B)

Thereafter, by using commercially available copper particles (average particle diameter: 28 μm, manufactured by Fukuda Metal Foil & Powder Co., Ltd.) or copper alloy particles shown in Table 1, a metal-containing layer was formed on the surface of each of the particles to produce surface-coated copper-based particles. Before the metal-containing layer was formed, a surface washing treatment using acid was performed to remove a surface oxide film. Then, various metallic elements were plated by electroless plating, followed by washing and drying. A plating thickness (covering thickness) and a coating rate were measured from the cross-sectional observation of the obtained surface-coated copper-based particles. The measured covering thickness and coating rate are shown in Table 2. The produced particles were measured by an ultraviolet-visible-near infrared spectrophotometer, and the covering thickness was calculated from a difference between the average particle diameter of the particles before plating and the average particle diameter of the particles after plating. The surface-coated copper-based particles after plating was subjected to chemical analysis, and the coating rate was geometrically calculated from a difference between the compositions.

The average composition shown in Table 2 was the composition of the surface-coated copper-based particles in which the metal-containing layer was formed on the copper-based particles. The total amount of the composite particles was melted by using mixed acid, and the solution was measured by an ICP emission spectrophotometer ICPE-9800 (manufactured by Shimadzu Corporation). The covering thickness was calculated by cutting the particles by an FIB, and observing the cross section with a scanning electron microscope (SEM). Supposing that the copper-based particles were true spheres, the coating rate was arithmetically calculated from an average particle diameter size, a covering thickness, and the true specific gravity of a covering material.

The optical reflection rate of one reproduced on a copper-based plate having the same composition as that of the copper-based particles before surface-coated (plating) was measured by an ultraviolet-visible-near infrared spectrophotometer, and an absorption rate was calculated from the same calculating formula. From the results, the absorption rate of a wavelength band of 1 μm is shown in Table 2. The surface-coated copper-based particles were layer-manufactured by using the above-mentioned laser manufacturing apparatus, and the results of the comprehensive determination as with Table 1 are shown in Table 2.

[Table 2]

Table 2

| | Surface-coated copper-based particles | | | | | | | | | | | | | | | | | | Manufactured product (copper alloy part) | | |
|---|---|---|---|---|---|---|---|---|---|---|---|---|---|---|---|---|---|---|---|---|---|---|
| | Copper-based particles | | Metal-containing layer | | | | Average composition | | | | | | | | (% by mass) | Average particle diameter | Light absorption rate of wavelength band of 1 μm | Void fraction | Fatigue resistance | Comprehensive determination |
| | Kind of particles | Average particle diameter | Covering thickness (μm)/coating rate (%) | | | | | | | | | | | | | | | | | | |
| | | (μm) | Ni | Co | Sn | Zn | Ni | Cr | Co | Mg | Si | Sn | Zn | S | Cu | (μm) | (%) | (%) | | |
| Example 1B | Copper alloy particles / Example 2A | 42 | 1.2/100 | 0/0 | 0/0 | 0/0 | 13.9 | 0.4 | 8.5 | 0.0 | 0.0 | 0.0 | 0.0 | 0.000 | Balance | 44.4 | 26.0 | 0.5 | Very good | Very good |
| Example 2B | Example 2A | | 2.3/100 | 0/0 | 0/0 | 0/0 | 23.7 | 0.4 | 7.5 | 0.0 | 0.0 | 0.0 | 0.0 | 0.000 | Balance | 46.5 | 26.0 | 0.5 | Very good | Very good |
| Example 3B | Example 2A | | 0.5/51 | 0/0 | 0/0 | 0/0 | 4.5 | 0.5 | 9.5 | 0.0 | 0.0 | 0.0 | 0.0 | 0.000 | Balance | 43.2 | 31.0 | 0.6 | Good | Good |
| Example 4B | Example 2A | | 0.5/70 | 0.5/30 | 0/0 | 0/0 | 6.0 | 0.5 | 11.4 | 0.0 | 0.0 | 0.0 | 0.0 | 0.000 | Balance | 43.2 | 26.0 | 0.4 | Very good | Very good |
| Example 5B | Example 4A | 35 | 0/0 | 0.5/50 | 0/0 | 0/0 | 3.7 | 0.0 | 7.1 | 0.5 | 1.1 | 0.0 | 0.0 | 0.019 | Balance | 36.6 | 23.1 | 0.6 | Very good | Good |
| Example 6B | Example 4A | | 0/0 | 0/0 | 0.5/100 | 0/0 | 3.5 | 0.0 | 0.9 | 0.5 | 1.1 | 9.5 | 0.0 | 0.019 | Balance | 36.6 | 40.0 | 0.7 | Good | Good |
| Example 7B | Example 4A | | 0/0 | 0/0 | 0.5/50 | 0/0 | 4.0 | 0.0 | 0.0 | 0.5 | 1.2 | 3.2 | 0.0 | 0.021 | Balance | 36.0 | 18.0 | 0.6 | Good | Good |
| Example 8B | Example 5A | 17 | 0/0 | 0/0 | 0/0 | 0.5/52 | 14.4 | 0.0 | 0.0 | 0.0 | 0.0 | 0.0 | 6.7 | 0.000 | Balance | 18.0 | 30.0 | 0.9 | Good | Good |
| Example 9B | Example 5A | | 0/0 | 0/0 | 0/0 | 0.5/51 | 14.5 | 0.0 | 0.0 | 0.0 | 0.0 | 0.0 | 3.2 | 0.000 | Balance | 17.4 | 8.0 | 0.8 | Good | Good |
| Example 10B | Copper particles / 100%Cu | 28 | 2.9/100 | 0/0 | 0/0 | 0/61 | 37.5 | 0.0 | 0.9 | 0.0 | 0.0 | 0.0 | 0.0 | 0.000 | Balance | 33.8 | 35.0 | 0.7 | Good | Very good |
| Example 11B | 100%Cu | | 1.1/100 | 0/0 | 0.7/100 | 0/61 | 15.4 | 0.0 | 0.9 | 0.0 | 0.0 | 5.8 | 0.0 | 0.000 | Balance | 31.0 | 40.0 | 0.7 | Good | Very good |
| Example 12B | 100%Cu | | 0.3/100 | 0/0 | 0/0 | 0.2/51 | 4.9 | 0.0 | 0.3 | 0.0 | 0.0 | 0.0 | 1.8 | 0.000 | Balance | 29.0 | 27.0 | 0.8 | Good | Good |
| Comparative Example 1B | Copper alloy particles / Example 2A | 42 | 0/0 | 0/0 | 5.0/100 | 0/0 | 9.9 | 0.3 | 5.9 | 0.0 | 0.0 | 39.9 | 0.0 | 0.000 | Balance | 53.0 | 40.0 | 2.4 | Poor | Poor |
| Comparative Example 2B | Example 2A | | 0/0 | 0/0 | 0/0 | 4/100 | 1.0 | 0.3 | 8.5 | 0.0 | 0.0 | 0.0 | 33.7 | 0.000 | Balance | 56.0 | 50.0 | 5.1 | Poor | Poor |
| Comparative Example 3B | Example 4A | 35 | 8.0/100 | 0/0 | 0/0 | 0/0 | 42.5 | 0.0 | 0.9 | 0.3 | 0.7 | 0.0 | 0.0 | 0.013 | Balance | 43.0 | 26.0 | 1.1 | Average | Average |
| Comparative Example 4B | Example 4A | | 0/0 | 2/100 | 0/0 | 0/0 | 3.0 | 0.0 | 25.9 | 0.4 | 0.9 | 0.0 | 0.0 | 0.016 | Balance | 39.0 | 26.0 | 1.3 | Poor | Poor |
| Comparative Example 5B | Example 5A | 17 | 0/0 | 0/0 | 1.0/100 | 0/0 | 11.9 | 0.0 | 0.0 | 0.0 | 0.3 | 0.0 | 22.6 | 0.000 | Balance | 19.0 | 40.0 | 1.3 | Poor | Poor |
| Comparative Example 6B | Copper particles / 100%Cu | 28 | 0.1/50 | 0/0 | 0/0 | 0/61 | 8.9 | 0.0 | 0.9 | 0.0 | 0.0 | 0.0 | 0.0 | 0.000 | Balance | 28.2 | 4.9 | 4.5 | Poor | Poor |
| Comparative Example 7B | 100%Cu | | 1.1/100 | 0/0 | 0/0 | 0/61 | 13.9 | 0.0 | 0.9 | 0.0 | 0.0 | 0.0 | 22.8 | 0.000 | Balance | 36.2 | 40.0 | 5.5 | Poor | Poor |

From the results shown in Table 2, in each of Examples 1B to 12B, the comprehensive determination was equal to or greater than "good"; a void fraction was less than 1%; and both fatigue resistance and corrosion resistance were equal to or greater than "good (A)". Meanwhile, in each of Comparative Examples 1B to 7B, a void fraction was 1% or more, and the comprehensive determinations was equal to or less than "average" and was non-acceptance.

(Examples 1C to 10C and Comparative Examples 1C to 8C)

Thereafter, a metal oxide layer was formed at a film thickness shown in Table 3 on the surface of copper alloy particles shown in Table 1 or surface-coated copper-based particles shown in Table 2, and the light absorption rate of a wavelength band of 1 μm as the formed particles and squeezing property were measured. By partial pressure control of $CO/CO_2$, the film thickness of the metal oxide layer was measured for the copper-based particles in which the metal oxide layer was compulsorily formed on the surface of the particles using an Auger electron spectrometer. The film thickness of the metal oxide layer was subjected to elemental analysis in a depth direction toward the inside of the particles from the surface of the particles, and a position at which an amount of oxygen was reduced to 1/10 of the amount of oxygen measured in the surface of the particles was defined as an oxidation layer. The total reflection rate of the metal oxide layer reproduced on a copper-based plate having the same composition as that of a copper-based powder was measured by an ultraviolet-visible-near infrared spectrophotometer when the surface of the copper-based plate was irradiated with a laser beam of a wavelength band of 1 μm, and the light absorption rate of the wavelength band of 1 μm was calculated.

The particles were layer-manufactured by using the above-mentioned laser manufacturing apparatus, and the results of a void fraction and comprehensive determination are shown in Table 3.

Here, squeezing property was evaluated at four stages by observing the distribution state of the particles obtained by subjecting the copper-based particles (powder) to squeezing in Concept Laser M2 with a microscope at 100 times. The results are shown in Table 3. Regarding the signs of the squeezing property shown in Table 3, "very good" means that particles are uniformly distributed; "good" means that deficits of particles of 1 to 3 are present in an area of 1 mm$^2$; "average" means that deficits of particles of 4 to 10 are present in an area of 1mm$^2$; and "poor" means

that deficits of particles of 11 or more are present in an area of 1 mm$^2$. In the present Examples, regarding the squeezing property, "very good" and "good" were taken as acceptance level.

The copper-based particles on which the metal oxide layer was formed were layer-manufactured by using the above-mentioned laser manufacturing apparatus, and the results of the comprehensive determination as with Table 1 are shown in Table 3.

[Table 3]

Table 3

| | Copper alloy particles or surface-coated copper-based particles | | | | | | Manufactured product (copper alloy part) | |
| | | | Average particle diameter (μm) | Film thickness of metal oxide layer (nm) | Light absorption rate of wavelength band of 1 μm (%) | Squeezing property | Void fraction (%) | Comprehensive determination |
|---|---|---|---|---|---|---|---|---|
| Example 1C | Copper alloy particles | Example 2A | 42 | 10 | 16 | Very good | 0.6 | Very good |
| Example 2C | | Example 2A | | 13 | 16 | Very good | 0.6 | Very good |
| Example 3C | | Example 2A | | 17 | 16 | Very good | 0.5 | Very good |
| Example 4C | | Example 2A | | 30 | 21 | Very good | 0.5 | Very good |
| Example 5C | | Example 2A | | 89 | 39 | Good | 0.9 | Good |
| Comparative Example 1C | | Example 2A | | 103 | 46 | Good | 1.1 | Poor |
| Comparative Example 2C | | Example 2A | | 209 | 72 | Average | 1.5 | Poor |
| Comparative Example 3C | | Example 2A | | 0.8 | 4.9 | Average | 0.9 | Poor |
| Comparative Example 4C | | Example 2A | | 1100 | 76 | Poor | 3.2 | Poor |
| Example 6C | Surface-coated copper-based particles | Example 7B | 36 | 9 | 24 | Good | 0.8 | Good |
| Example 7C | | Example 7B | | 37 | 41 | Good | 0.7 | Good |
| Example 8C | | Example 7B | | 21 | 29 | Good | 0.7 | Good |
| Example 9C | | Example 7B | | 40 | 42 | Good | 0.6 | Good |
| Example 10C | | Example 7B | | 13 | 23 | Good | 0.7 | Good |
| Comparative Example 5C | | Example 7B | | 0.8 | 20 | Average | 0.8 | Poor |
| Comparative Example 6C | | Example 7B | | 195 | 61 | Poor | 2.1 | Poor |
| Comparative Example 7C | | Example 7B | | 197 | 62 | Poor | 2.2 | Poor |
| Comparative Example 8C | | Example 7B | | 140 | 57 | Poor | 1.9 | Poor |

From the results shown in Table 3, in each of Examples 1C to 10C, the comprehensive determination was equal to or greater than "good"; the void fraction was less than 1%; and the squeezing property was equal to or greater than "good". Meanwhile, in each of Comparative Examples 1C to 8C, at least one of the void fraction (less than 1%) and the squeezing property (equal to or greater than "good") was not acceptance level, and the comprehensive determination was equal to or less than "average" and was non-acceptance.

(Examples 1D to 11D and Comparative Examples 1D to 4D)

Copper-based particles of commercially available copper particles (average particle diameter: 28 μm, manufactured by Fukuda Metal Foil & Powder Co., Ltd.) or copper alloy particles shown in Table 1, and heteroparticles having an average particle diameter shown in Table 4 were kneaded at a mixing rate shown in Table 4, to produce mixed particles. The average composition of the mixed particles was measured by an ICP emission spectrophotometer ICPE-9800 in a state where the mixed particles were melted. The average composition of the mixed particles and the light absorption rate of a wavelength band of 1 μm are shown in Table 5. Thereafter, a laser layering experiment was conducted by using the produced mixed particles. The mixed particles were layer-manufactured by using the above-mentioned laser manufacturing apparatus, and the results of the void fraction of the manufactured product (copper alloy part) and the comprehensive determination as with Table 1 are shown in Table 5.

[Table 4]

Table 4.

| | Mixed particles | | | | | | | | | | | | | | | | | | | | | |
| | Copper-based particles | | | | Heteroparticles | | | | | | | | | | | | | | | | | |
| | | | | | Component composition | | | | | | | | | | | | | | | | (% by mass) | |
| | Kind of particles | Average particle diameter | Light absorption rate of wavelength band of 1 μm | Mixing rate | Ni | | Al | | Cr | | Co | | Fe | | Mg | | Mo | | Sn | | X | |
| | | [μm] | (%) | (% by mass) | Average particle diameter (μm) | Mixing rate (% by mass) | Average particle diameter (μm) | Mixing rate (% by mass) | Average particle diameter (μm) | Mixing rate (% by mass) | Average particle diameter (μm) | Mixing rate (% by mass) | Average particle diameter (μm) | Mixing rate (% by mass) | Average particle diameter (μm) | Mixing rate (% by mass) | Average particle diameter (μm) | Mixing rate (% by mass) | Average particle diameter (μm) | Mixing rate (% by mass) | Average particle diameter (μm) | Mixing rate (% by mass) |
| Example 1D | Copper particles / 100%Cu | 28 | 4.6 | 87.4 | 18 | 9.8 | 0 | 0 | 0 | 0 | 0 | 0 | 0 | 0 | 0 | 0 | 0 | 0 | 46 | 2.8 | 0 | 0 |
| Example 2D | | 28 | 4.6 | 79.0 | 33 | 15.0 | 44 | 6.0 | 0 | 0 | 0 | 0 | 0 | 0 | 0 | 0 | 0 | 0 | 0 | 0 | 0 | 0 |
| Example 3D | | 28 | 4.6 | 91.0 | 0 | 0 | 0 | 0 | 0 | 0 | 0 | 0 | 0 | 0 | 0 | 0 | 0 | 0 | 0 | 0 | 22 | 9.0 |
| Example 4D | Copper alloy particles / The same alloy composition as that of Examples 2A | 25 | 12.8 | 94.5 | 13 | 5.0 | 0 | 0 | 35 | 0.5 | 0 | 0 | 0 | 0 | 0 | 0 | 0 | 0 | 0 | 0 | 0 | 0 |
| Example 5D | | 43 | 12.8 | 80.0 | 13 | 7.2 | 43 | 9.3 | 35 | 3.5 | 0 | 0 | 0 | 0 | 0 | 0 | 0 | 0 | 0 | 0 | 0 | 0 |
| Example 6D | | 23 | 12.8 | 89.1 | 0 | 0 | 43 | 2.1 | 35 | 0.8 | 22 | 3.2 | 0 | 0 | 0 | 0 | 0 | 0 | 23 | 4.8 | 0 | 0 |
| Example 7D | | 42 | 12.8 | 96.0 | 0 | 0 | 0 | 0 | 0 | 0 | 0 | 0 | 0 | 0 | 0 | 0 | 0 | 0 | 0 | 0 | 22 | 9.0 |
| Example 8D | The same alloy composition as that of Examples 4A | 11 | 6.5 | 93.0 | 18 | 5.6 | 0 | 0 | 35 | 1.0 | 0 | 0 | 0 | 0 | 18 | 1.0 | 0 | 0 | 0 | 0 | 0 | 0 |
| Example 9D | | 8 | 6.5 | 58.0 | 46 | 9.7 | 12 | 3.2 | 41 | 7.8 | 49 | 0.9 | 41 | 8.9 | 21 | 0.5 | 13 | 4.0 | 19 | 7.0 | 0 | 0 |
| Example 10D | | 11 | 6.5 | 39.8 | 9 | 18.0 | 41 | 9.0 | 2 | 9.8 | 31 | 8.8 | 34 | 3.0 | 17 | 0.4 | 2 | 8.9 | 18 | 9.3 | 0 | 0 |
| Example 11D | | 8 | 6.5 | 92.0 | 0 | 0 | 0 | 0 | 0 | 0 | 0 | 0 | 0 | 0 | 0 | 0 | 0 | 0 | 0 | 0 | 22 | 8.0 |
| Comparative Example 1D | Copper particles / 100%Cu | 28 | 4.6 | 99.5 | 18 | 0.5 | 0 | 0 | 0 | 0 | 0 | 0 | 0 | 0 | 0 | 0 | 0 | 0 | 0 | 0 | 0 | 0 |
| Comparative Example 2D | | 28 | 4.6 | 97.7 | 18 | 2.0 | 0 | 0 | 0 | 0 | 0 | 0 | 0 | 0 | 0 | 0 | 0 | 0 | 15 | 0.3 | 0 | 0 |
| Comparative Example 3D | Copper alloy particles / The same alloy composition as that of Examples 4 | 11 | 6.5 | 60.0 | 46 | 40.0 | 0 | 0 | 0 | 0 | 0 | 0 | 0 | 0 | 0 | 0 | 0 | 0 | 0 | 0 | 0 | 0 |
| Comparative Example 4D | | 8 | 6.5 | 50.0 | 9 | 50.0 | 0 | 0 | 0 | 0 | 0 | 0 | 0 | 0 | 0 | 0 | 0 | 0 | 0 | 0 | 0 | 0 |

[Table 5]

Table 5

| | Mixed particles | | | | | | | | | | | | | Manufactured product (copper alloy part) | | | |
|---|---|---|---|---|---|---|---|---|---|---|---|---|---|---|---|---|---|
| | Average composition | | | | | | | | | | | | (% by mass) | Light absorption rate of wavelength band of 1 μm | Void fraction | Fatigue resistance | Corrosion resistance | Comprehensive determination |
| | Ni | Al | Cr | Co | Fe | Mg | Mo | Si | Sn | W | S | Cu | (%) | (%) | | | |
| Example 1D | 9.8 | 0.0 | 0.0 | 0.0 | 0.0 | 0.0 | 0.0 | 0.0 | 2.5 | 0.0 | 0.00 | Balance | 8.8 | 0.3 | Good | Very good | Very good |
| Example 2D | 15.0 | 6.0 | 0.0 | 0.0 | 0.0 | 0.0 | 0.0 | 0.0 | 0.0 | 0.0 | 0.00 | Balance | 14.8 | 0.8 | Good | Good | Good |
| Example 3D | 0.0 | 0.0 | 0.0 | 0.0 | 0.0 | 0.0 | 0.0 | 0.0 | 0.0 | 9.0 | 0.00 | Balance | 6.1 | 0.9 | Good | Good | Good |
| Example 4D | 6.4 | 0.0 | 1.0 | 9.3 | 0.0 | 0.0 | 0.0 | 0.0 | 0.0 | 0.0 | 0.00 | Balance | 14.0 | 0.5 | Good | Very good | Very good |
| Example 5D | 8.4 | 9.3 | 3.9 | 7.8 | 0.0 | 0.0 | 0.0 | 0.0 | 0.0 | 0.0 | 0.00 | Balance | 21.5 | 0.7 | Good | Very good | Very good |
| Example 6D | 1.3 | 2.1 | 1.2 | 11.9 | 0.0 | 0.0 | 0.0 | 0.0 | 4.8 | 0.0 | 0.00 | Balance | 16.9 | 0.9 | Good | Very good | Good |
| Example 7D | 1.5 | 0.0 | 0.5 | 9.8 | 0.0 | 0.0 | 0.0 | 0.0 | 0.0 | 5.0 | 0.00 | Balance | 8.9 | 0.8 | Good | Good | Good |
| Example 8D | 8.7 | 1.0 | 0.0 | 0.0 | 0.0 | 1.5 | 0.0 | 1.1 | 0.0 | 0.0 | 0.02 | Balance | 9.9 | 0.9 | Good | Good | Good |
| Example 9D | 12.0 | 3.2 | 7.8 | 0.9 | 8.9 | 0.8 | 4.0 | 0.7 | 7.0 | 0.0 | 0.01 | Balance | 20.6 | 0.4 | Good | Good | Good |
| Example 10D | 19.6 | 9.0 | 9.8 | 6.8 | 3.0 | 0.6 | 6.9 | 0.5 | 6.3 | 0.0 | 0.01 | Balance | 26.7 | 0.7 | Good | Good | Good |
| Example 11D | 4.0 | 0.0 | 0.0 | 0.0 | 0.0 | 0.5 | 0.0 | 1.2 | 0.0 | 8.0 | 0.00 | Balance | 7.7 | 0.8 | Good | Good | Good |
| Comparative Example 1D | 0.5 | 0.0 | 0.0 | 0.0 | 0.0 | 0.0 | 0.0 | 0.0 | 0.0 | 0.0 | 0.00 | Balance | 4.8 | 2.6 | Average | Poor | Poor |
| Comparative Example 2D | 2.0 | 0.0 | 0.0 | 0.0 | 0.0 | 0.0 | 0.0 | 0.0 | 0.3 | 0.0 | 0.00 | Balance | 5.3 | 1.9 | Average | Average | Poor |
| Comparative Example 3D | 42.4 | 0.0 | 0.0 | 0.0 | 0.0 | 0.3 | 0.0 | 0.7 | 0.0 | 0.0 | 0.01 | Balance | 17.9 | 1.3 | Average | Average | Average |
| Comparative Example 4D | 52.0 | 0.0 | 0.0 | 0.0 | 0.0 | 0.3 | 0.0 | 0.6 | 0.0 | 0 | 0.01 | Balance | 20.8 | 3.1 | Average | Average | Poor |

From the results shown in Table 5, in each of Examples 1D to 11D, the comprehensive determination was equal to or greater than "good"; the void fraction was less than 1%; and both fatigue resistance and corrosion resistance were equal to or greater than "good". Meanwhile, each of Comparative Examples 1D to 4D, the void fraction was 1% or more, and the comprehensive determination was equal to or less than "average" and was non-acceptance.

Hereinafter, the falling speed of the copper-based particles (average particle diameter: 28.9 nm) was measured by the "Metal powder-fluidity measurement method" as the evaluation of flowability. A falling time at this time was set to 100, and the falling times of the mixed particles obtained by mixing the copper-based particles having various sizes with the heteroparticles were compared with each other. In the present test, a case where the threshold value of the fall different time ratio of the copper-based particles and the heteroparticles in the mixed particles was 110 or less was evaluated as "good"; a case where the threshold value was more than 110 and 150 or less was evaluated as "average"; a case where the threshold value was more than 150 was evaluated as "poor"; and a case where the threshold value was more than 200 was evaluated as "very poor".

[Table 6]

**Table 6**

| | Mixed particles | | | Flowability (falling time ratio) | Evaluation |
|---|---|---|---|---|---|
| | Average particle diameter (a) of copper-based particles | Average particle diameter (b) of heteroparticles | (b) ÷ (a) | | |
| | (μm) | (μm) | | | |
| Example 12D | 28,8 | 1,3 | 0.05 | 99 | Good |
| Example 13D | 33,6 | 28,1 | 0.84 | 102 | Good |
| Example 14D | 21,1 | 29,6 | 1.40 | 103 | Good |

(continued)

| | Mixed particles | | | Flowability (falling time ratio) | Evaluation |
| | Average particle diameter (a) of copper-based particles | Average particle diameter (b) of heteroparticles | (b) ÷ (a) | | |
| | ($\mu$m) | ($\mu$m) | | | |
| Example 15D | 28,8 | 3,6 | 0.13 | 149 | Average |
| Comparative Example 5D | 13,5 | 4,9 | 0.36 | 173 | Poor |
| Comparative Example 6D | 28,9 | 6,9 | 0.24 | 309 | Very poor |

From the evaluation results shown in Table 6, Examples 12D to 15D had excellent flowability.

(Example 1E, Comparative Example 1E, Conventional Example 1E)

In Example 1E, a heat pipe 1 having a wick structure 2 shown in FIG. 1 was produced by Additive Manufacturing the copper alloy particles of Example 6A shown in Table 1 as a material using a 3D Additive Manufacturing apparatus (Concept Laser M2). The produced heat pipe has a fine straight refrigerant transfer path, and the used average particle size is 42 $\mu$m. This is exposed in the surface of the fine path, to exert a capillary force, thereby increasing a refrigerant transport force. In addition, a straight flow path is secured, to provide less resistance of the transfer path. This also leads to an improvement in the refrigerant transport force.

For comparison, there were also prepared a heat pipe (Comparative Example 1E) produced by Additive Manufacturing commercially available copper particles (average particle diameter: 28 $\mu$m, manufactured by Fukuda Metal Foil & Powder Co., Ltd.) as a material, and a heat pipe (Conventional Example 1E) produced by sintering a metallic powder using a normal copper pipe and having a wick structure shown in FIG. 2 in place of the copper alloy powder of Example 6A.

The heat transport amounts, fatigue resistances, and comprehensive determinations of the above produced heat pipes were compared with each other. These results are shown in Table 7. All of the heat transport amounts, fatigue resistances, and comprehensive determinations shown in Table 7 are shown on the basis of those of Conventional Example 1E. The numerical values of the heat transport amount and fatigue resistance are shown in an index ratio with the numerical values of Conventional Example 1E set to 100. Larger numerical values mean more excellent characteristics. The comprehensive determination is represented as "good" when it is more excellent than that of Conventional Example 1E, and as "poor" when it is poorer than that of Conventional Example 1E.

[Table 7]

Table 7

| | Particles to be used | Structure of heat pipe | Performance evaluation | | |
| | | | Heat transport amount | Fatigue characteristics | Comprehensive determination |
| Example 1E | Copper alloy particles of Example 6A | Fig. 1 | 390 | 110 | Good |
| Comparative Example 1E | Copper particles | Fig. 1 | 350 | 10 | Poor |
| Conventional Example 1E | Copper particles | Fig. 2 | 100 | 100 | Criteria |

From the results shown in Table 7, Example 1E has fatigue characteristics equal to or greater than those of Conventional Example 1E, and a heat transport amount improved by 3.9 times. Comparative Example 1E obtained by Additive Manufacturing commercially available copper particles as a material had poorer fatigue characteristics than those of Conventional Example 1E (fatigue characteristics of 1/10 of those of Conventional Example 1E).

Industrial Applicability

According to the present invention, heat generated through the irradiation of a laser beam during manufacturing in particular causes a good melt-solidification phenomenon to occur in an irradiation portion of a particle layer, to provide a layer-manufactured product having a low porosity (void fraction) numerical number of less than 1%, and excellent corrosion resistance and fatigue characteristics, for example, copper alloy particles, surface-coated copper-based particles, and mixed particles suitable for providing a heat diffusion part such as a heat pipe or a vapor chamber, and an electronic device part such as a bus bar, a connector, or a lead frame mounted in a personal computer and a smart phone or the like. In particular, when any of the copper alloy particles, surface-coated copper alloy particles, and mixed particles of the present invention is applied to the heat pipe, the size of the cross-sectional area can be optionally changed, whereby the layer-manufactured product can be installed in a slight space for high-density packaging of the personal computer and the smart phone or the like. A structure having a penetration hole can be highly adhered to a heat generation portion using a fine screw, to decrease heat resistance, thereby improving a heat release effect. Furthermore, a heat sink and a heat spreader are also simultaneously manufactured, whereby heat resistance occurring when these are individually manufactured and connected is vanished, to improve a heat release efficiency.

List of Reference Signs

1    heat pipe
2    wick structure

**Claims**

1. Copper alloy particles **characterized by** being used as an Additive Manufacturing material by irradiation with a laser beam having a wavelength of 1.2 $\mu$m or less, and having an average particle diameter of 50 $\mu$m or less, wherein a light absorption rate of the material is 6% or more.

2. The copper alloy particles according to claim 1, wherein the copper alloy particles contain Ni: 1.0 to 40.0% by mass, Al: 0 to 10% by mass, Cr: 0 to 10% by mass, Co: 0 to 10% by mass, Fe: 0 to 10% by mass, Mg: 0 to 10% by mass, Mn : 0 to 10% by mass, Mo: 0 to 10% by mass, Pd: 0 to 10% by mass, Pt: 0 to 10% by mass, Rh: 0 to 10% by mass, Si: 0 to 10% by mass, Sn: 0 to 10% by mass, Ti: 0 to 10% by mass, W: 0 to 10% by mass, Zn: 0 to 10% by mass, C: 0 to 10% by mass, and S: 0 to 10% by mass, the balance being copper and unavoidable impurities.

3. The copper alloy particles according to claim 2, wherein
the copper alloy particles contain at least one element selected from the group of Al: 0.5 to 10% by mass, Cr: 0.5 to 10% by mass, Co: 0.5 to 10% by mass, Fe: 0.5 to 10% by mass, Mg: 0.5 to 10% by mass, Mn : 0.5 to 10% by mass, Mo: 0.5 to 10% by mass, Pd: 0.5 to 10% by mass, Pt: 0.5 to 10% by mass, Rh: 0.5 to 10% by mass, Si: 0.5 to 10% by mass, Sn: 0.5 to 10% by mass, Ti: 0.5 to 10% by mass, W: 0.5 to 10% by mass, Zn: 0.5 to 10% by mass, C: 0.5 to 10% by mass, and S: 0.5 to 10% by mass; and
when the at least one or more element contained is two or more elements, a total content of the two or more elements is 1 to 30% by mass.

4. The copper alloy particles according to any one of claims 1 to 3, further comprising a metal oxide layer formed on a surface thereof and having a film thickness of 1.0 to 100 nm.

5. Surface-coated copper-based particles comprising:

copper-based particles of copper particles used as an Additive Manufacturing material by irradiation with a laser beam having a wavelength of 1.2 $\mu$m or less, and having an average particle diameter of 50 $\mu$m or less, or copper alloy particles according to any one of claims 1 to 3; and

a metal-containing layer formed at a coating rate of 50% or more on a surface of the copper-based particles, wherein
a light absorption rate of the material is 6% or more;
an average composition of the surface-coated copper-based particles contains Ni: 1.0 to 40.0% by mass, Al: 0 to 10% by mass, Cr: 0 to 10% by mass, Co: 0 to 10% by mass, Fe: 0 to 10% by mass, Mg: 0 to 10% by mass, Mn : 0 to 10% by mass, Mo: 0 to 10% by mass, Pd: 0 to 10% by mass, Pt: 0 to 10% by mass, Rh: 0 to 10% by mass, Si: 0 to 10% by mass, Sn: 0 to 10% by mass, Ti: 0 to 10% by mass, W: 0 to 10% by mass, Zn: 0 to 10% by mass, C: 0 to 10% by mass, and S: 0 to 10% by mass, the balance being copper and unavoidable impurities.

6.  The surface-coated copper-based particles according to claim 5, wherein
the average composition of the surface-coated copper-based particles contains at least one element selected from the group of Ni: 1.0 to 40.0% by mass, Al: 0.5 to 10% by mass, Cr: 0.5 to 10% by mass, Co: 0.5 to 10% by mass, Fe: 0.5 to 10% by mass, Mg: 0.5 to 10% by mass, Mn: 0.5 to 10% by mass, Mo: 0.5 to 10% by mass, Pd: 0.5 to 10% by mass, Pt: 0.5 to 10% by mass, Rh: 0.5 to 10% by mass, Si: 0.5 to 10% by mass, Sn: 0.5 to 10% by mass, Ti: 0.5 to 10% by mass, W: 0.5 to 10% by mass, Zn: 0.5 to 10% by mass, C: 0.5 to 10% by mass, and S: 0.5 to 10% by mass;
when the at least one or more element contained is two or more elements, a total content of the two or more elements is 1 to 30% by mass; and
the balance is copper and unavoidable impurities.

7.  The surface-coated copper-based particles according to claim 5 or 6, further comprising a metal oxide layer formed on a surface thereof and having a film thickness of 1.0 to 100 nm.

8.  Mixed particles **characterized by** comprising:

copper-based particles used as an Additive Manufacturing material by irradiation with a laser beam having a wavelength of 1.2 $\mu$m or less, having an average particle diameter of 50 $\mu$m or less, and made of copper or a copper alloy; and
heteroparticles having a different composition from that of the copper-based particles,
wherein an average light absorption rate ($\beta$) of the material calculated from the following formula is 6% or more:

[Expression 1]

$$\beta = \sum_i \alpha_i \times V_i$$

wherein $\alpha_i$ is a light absorption rate of the material of each particle i forming the mixed particles, and $V_i$ is a volume fraction of each particle i in the mixed particles.

9.  The mixed particles according to claim 8, wherein an average composition of the mixed particles contains Ni: 1.0 to 40.0% by mass, Al: 0 to 10% by mass, Cr: 0 to 10% by mass, Co: 0 to 10% by mass, Fe: 0 to 10% by mass, Mg: 0 to 10% by mass, Mn: 0 to 10% by mass, Mo: 0 to 10% by mass, Pd: 0 to 10% by mass, Pt: 0 to 10% by mass, Rh: 0 to 10% by mass, Si: 0 to 10% by mass, Sn: 0 to 10% by mass, Ti: 0 to 10% by mass, W: 0 to 10% by mass, Zn: 0 to 10% by mass, C: 0 to 10% by mass, and S: 0 to 10% by mass, the balance being copper and unavoidable impurities.

10. The mixed particles according to claim 9, wherein
the average composition contains at least one element selected from the group of Ni: 1.0 to 40.0% by mass, Al: 0.5 to 10% by mass, Cr: 0.5 to 10% by mass, Co: 0.5 to 10% by mass, Fe: 0.5 to 10% by mass, Mg: 0.5 to 10% by mass, Mn: 0.5 to 10% by mass, Mo: 0.5 to 10% by mass, Pd: 0.5 to 10% by mass, Pt: 0.5 to 10% by mass, Rh: 0.5 to 10% by mass, Si: 0.5 to 10% by mass, Sn: 0.5 to 10% by mass, Ti: 0.5 to 10% by mass, W: 0.5 to 10% by mass, Zn: 0.5 to 10% by mass, C: 0.5 to 10% by mass, and S: 0.5 to 10% by mass;
when the at least one or more element contained is two or more elements, a total content of the two or more elements is 1 to 30% by mass; and
the balance is copper and unavoidable impurities.

11. The mixed particles according to any one of claims 8 to 10, wherein a ratio of an average particle diameter of the heteroparticles to an average particle diameter of the copper-based particles is within a range of 0.1 or less, or 0.5 to 1.5.

12. The mixed particles according to any one of claims 8 to 11, wherein the heteroparticles are single component particles or particles of two or more alloy components selected from the group of Ni, Al, Cr, Co, Fe, Mg, Mn, Mo, Pd, Pt, Rh, Si, Sn, Ti, W, Zn, C, and S.

13. A method for manufacturing a layer-manufactured product comprising:

a particle layer forming step of forming a particle layer with the copper alloy particles according to any one of claims 1 to 4; and
a manufactured layer forming step of melt-solidifying the copper alloy particles present at a predetermined position of the particle layer to form a manufactured layer,
wherein the particle layer forming step and the manufactured layer forming step are sequentially repeated to layer the manufactured layer.

14. A method for manufacturing a layer-manufactured product comprising:

a particle layer forming step of forming a particle layer with the surface-coated copper-based particles according to any one of claims 5 to 7; and
a manufactured layer forming step of melt-solidifying the copper alloy particles present at a predetermined position of the particle layer to form a manufactured layer,
wherein the particle layer forming step and the manufactured layer forming step are sequentially repeated to layer the manufactured layer.

15. A method for manufacturing a layer-manufactured product comprising:

a particle layer forming step of forming a particle layer with the mixed particles according to any one of claims 8 to 12; and
a manufactured layer forming step of melt-solidifying the copper alloy particles present at a predetermined position of the particle layer to form a manufactured layer,
wherein the particle layer forming step and the manufactured layer forming step are sequentially repeated to layer the manufactured layer.

16. The method for manufacturing according to any one of claims 13 to 15, further comprising the step of performing at least one of a heat treatment step and a forge treatment step after layering the manufactured layer.

FIG.1

FIG.2

| INTERNATIONAL SEARCH REPORT | International application No. |
|---|---|
| | PCT/JP2018/016671 |

A. CLASSIFICATION OF SUBJECT MATTER
Int.Cl. B22F1/00(2006.01)i

According to International Patent Classification (IPC) or to both national classification and IPC

B. FIELDS SEARCHED

Minimum documentation searched (classification system followed by classification symbols)
Int.Cl. B22F1/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2016-211062 A (DAIHEN CORPORATION) 15 December 2016, claims & US 2016/0332227 A1, claims & US 2017/0320134 A1, claims & US 2017/0333987 A1, claims & WO 2016/181924 A1, claims & EP 3093086 A1, claims & EP 3241635 A1, claims & CN 106141182 A & TW 201704485 A | 1-16 |

☒ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 June 2018 (05.06.2018) | 19 June 2018 (19.06.2018) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
|---|
| PCT/JP2018/016671 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2008-028286 A (FUJI ELECTRIC HOLDINGS CO., LTD.) 07 February 2008, paragraph [0013] (Family: none) | 1-16 |
| Y | JP 2003-340924 A (FUJI PHOTO FILM CO., LTD.) 02 December 2003, paragraph [0023] & US 2003/0214571 A1, paragraph [0059] & WO 03/085457 A1, specification, page 12, line 26 to page 13, line 6 & IL 164483 D & TW 200405032 A & CN 1659479 A & KR 10-2005-0003356 A | 1-4, 13, 16 |
| Y | JP 04-131341 A (FUKUDA METAL FOIL & POWDER CO., LTD.) 06 May 1992, claims (Family: none) | 1-4, 13, 16 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6030186 B
- JP 2016053198 A
- JP 5943963 B

**Non-patent literature cited in the description**

- *Journal of Japan Welding Society,* 2009, vol. 78th (2), 124-138